# EUROPEAN PATENT APPLICATION

(11) **EP 3 024 215 A1**
(43) Date of publication of application: **25.05.2016**
(21) Application number: 15193397.5
(22) Date of filing: 06.11.2015
(51) Int. Cl.: H04N 1/32, H04M 1/57

(54) **PRINTING APPARATUS, CONTROL METHOD FOR PRINTING APPARATUS, AND STORAGE MEDIUM**

(30) Priority: 21.11.2014 JP 2014236994
(71) Applicant: Canon Kabushiki Kaisha, Tokyo 146-8501 (JP)
(72) Inventor: INOUE, Katsuhiro, Tokyo,, Tokyo 146-8501 (JP)
(74) Representative: TBK

(57) **Abstract**

A printing apparatus according to the present invention includes first storage means (104) for storing a telephone number inhibited from reception of image data therefrom, second storage means (104) for storing a telephone number permitted to print image data without a print instruction from a user, and control means (101) for controlling so as to inhibit reception of image data if a telephone number of a communication partner is stored in the first storage means (104), to print image data without the print instruction from the user if the telephone number of the communication partner is stored in the second storage means (104), and to print image data in accordance with the print instruction from the user if the telephone number of the communication partner is not stored in the first storage means (104) and the second storage means (104).

## Description

### BACKGROUND OF THE INVENTION

### Field of the Invention

The present invention relates to a printing apparatus, a control method for the printing apparatus, and a storage medium.

### Description of the Related Art

One conventional technology may determine whether a source of a communication start request is registered with a black list or not in response to reception of the communication start request. (See Japanese Patent Laid-Open No. 2010-98468.)

If it is determined that the source of the communication start request is registered with the black list, the reception of image data from the source is rejected. If not, printing based on the image data is performed without receiving a print instruction.

According to another technology, in response to reception of a communication start request, whether the source of the communication start request is matched with a source registered with the white list or not is determined. If the source of the communication start request is registered with the white list, the communication is permitted. If not, the communication is rejected.

In the past, a user is not allowed to pre-select one of three options of inhibiting reception of image data, printing image data without receiving a print instruction, and printing image data in accordance with a print instruction.

According to the technology according to Japanese Patent Laid-Open No. 2010-98468, whether the reception of image data from a communication partner is to be rejected or not or whether image data is to be received from a communication partner to print without receiving a print instruction or not may be selected. However, according to the technology, a user is not able to select, as a third option, processing for printing image data from a communication partner in accordance with a print instruction.

A user is also able to select whether to permit or inhibit communication with a communication partner based on a white list. However, a user is not able to pre-select one of three options including inhibiting reception of image data, printing image data without a print instruction, and printing image data in accordance with a print instruction.

### SUMMARY OF THE INVENTION

The present invention in its first aspect provides a printing apparatus as specified in claims 1 to 7.

The present invention in its second aspect provides a control method for a printing apparatus as specified in claims 8 to 14.

The present invention in its third aspect provides a printing storage medium as specified in claim 15.

Further features of the present invention will become apparent from the following description of exemplary embodiments with reference to the attached drawings.

### BRIEF DESCRIPTION OF THE DRAWINGS

Fig. 1 is a block diagram illustrating a configuration of an image processing apparatus according to an embodiment.
Fig. 2 illustrates an operating unit according to the embodiment.
Fig. 3 illustrates an operation screen according to the embodiment.
Figs. 4A and 4B illustrate a reception rejection list and a print permission list according to the embodiment.
Figs. 5A and 5B illustrate operation screens according to the embodiment.
Figs. 6A and 6B illustrate operation screens according to the embodiment.
Figs. 7A to 7C illustrate operation screens according to the embodiment.
Figs. 8A and 8B are a flowchart illustrating a control example according to the embodiment.
Fig. 9 is a flowchart illustrating a control example according to the embodiment.
Fig. 10 is a flowchart illustrating a control example according to the embodiment.
Fig. 11 is a flowchart illustrating a control example according to the embodiment.

### DESCRIPTION OF THE EMBODIMENTS

Embodiments according to the present invention will be described with reference to drawings.

### First Embodiment

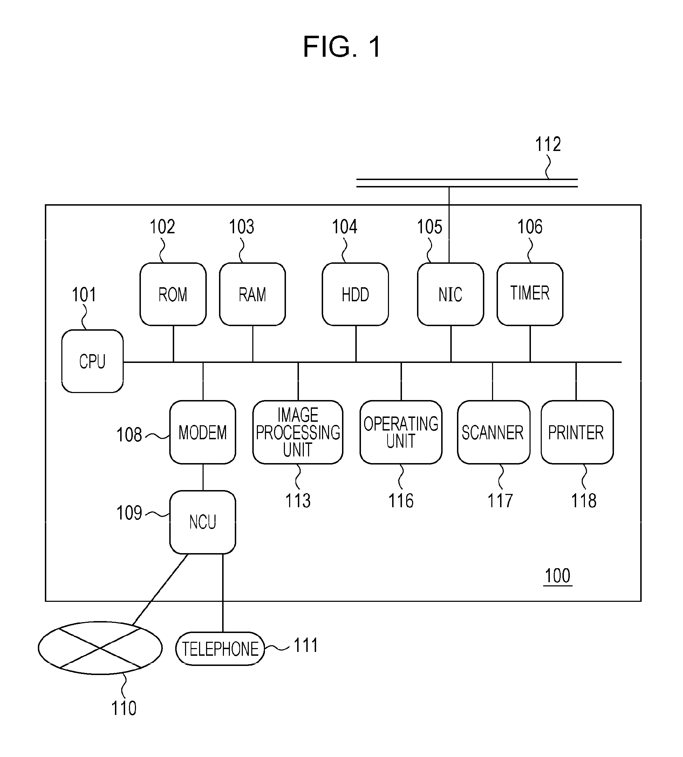

Fig. 1 is a block diagram illustrating a configuration of an MFP (MultiFunction Peripheral) 100 which is an example of an image processing apparatus (printing apparatus) according to this embodiment.

The MFP 100 according to this embodiment includes a CPU 101, a ROM 102, a RAM 103, and an HDD 104. The MFP 100 further includes an NIC 105, a timer 106, a modem 108, an NCU 109, an image processing unit 113, an operating unit 116, a scanner 117, and a printer 118. The NIC stands for Network Interface Card. The NCU stands for Network Control Unit.

The CPU 101 generally controls the MFP 100 by reading out a program stored in the ROM 102 or HDD 104 to the RAM 103 and executing it.

The ROM 102 stores a program to be read and executed by the CPU 101.

The RAM 103 functions as a work area of the CPU 101. The RAM 103 stores data or a program read by the CPU 101.

The HDD 104 is a large- capacity, nonvolatile memory configured to store a program and image data. It should be understood that a Blu-ray Disc or an SSD (Solid State Drive)may be used instead of the HDD 104.

The NIC 105 controls network communication implemented by the MFP 100 over the LAN 112. The MFP 100 implements a network communicate with an external PC and MFP through the NIC 105 and LAN 112.

The modem 108 modulates/demodulates a facsimile-communicated signal. The modem 108 modulates data to be facsimile transmitted from the MFP 100 to a PSTN (Public Switched Telephone Networks) 110. The modem 108 demodulates data to be facsimile received from the PSTN 110 to the MFP 100.

The NCU 109 is connected to the PSTN 110 and exchanges information with an exchanging system provided in a telephone station, for example, in accordance with a predetermined procedure. For example, the NCU 109 exchanges a dialing signal in order for the MFP 100 to communicate through the PSTN 110.

The PSTN 110 is a public telephone line.

A telephone 111 is provided externally to the MFP 100 and has a handset usable for phone calls and an answering function.

An image processing unit 113 executes image data rotation processing and monochrome/polychrome conversion processing.

The operating unit 116 includes hardware keys and a display unit including a touch panel. The operating unit 116 displays operation screens and a status of the MFP 100 on the display unit. The operating unit 116 further accepts an operation from a user through the hardware keys or touch panel.

The scanner 117 reads an image on a document placed on a document positioning plate and generates image data representative of the read image of the document. It should be noted that the scanner 117 may have an ADF (Auto Document Feeder) configured to convey a plurality of sheets sequentially one by one. When the ADF is used, the scanner 117 reads an image on a document conveyed by the ADF and generates image data representative of the document. The generated image data is stored in the HDD 104.

The printer 118 conveys a sheet and prints an image on the conveyed sheet. The image printing is performed based on image data of a document read by the scanner 114, image data received through the PSTN 110, and image data received from the LAN 112.

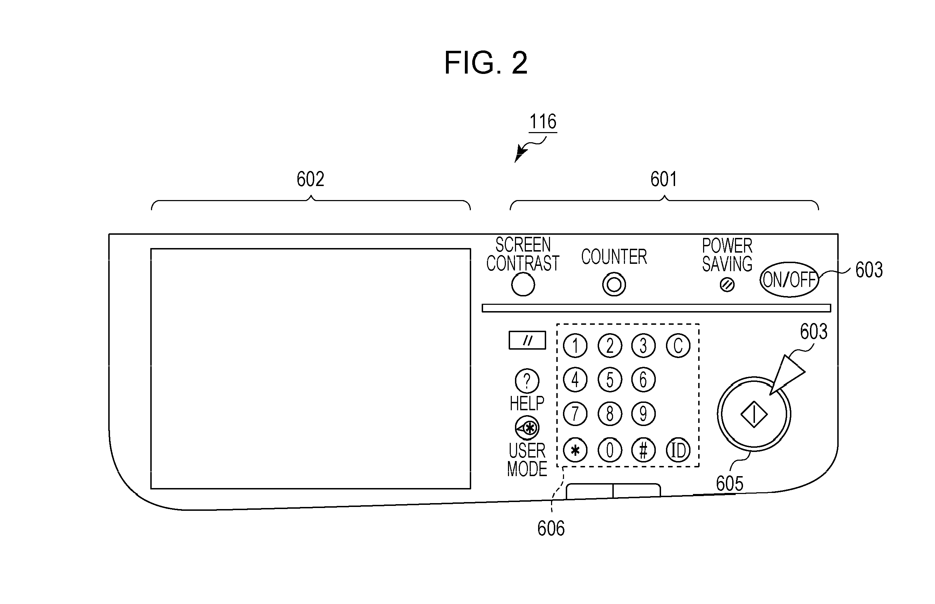

Fig. 2 illustrates the operating unit 116 included in the MFP 100 illustrated in Fig. 1.

The operating unit 116 has a key input unit 601 configured to receive a user operation performed with the hardware keys and a touch panel section 602 capable of displaying software keys and accepting a user operation performed with the software keys.

First, the key input unit 601 will be described. As illustrated in Fig. 2, the key input unit 601 includes an operating-unit power supply switch 603. If the operating-unit power supply switch 603 is pressed by a user when the MFP 100 is in a standby mode (normal operational state), the CPU 101 changes the MFP 100 from the standby mode to a sleep mode (state consuming less power than the normal operational state). On the other hand, if the operating-unit power supply switch 603 is pressed by a user when the MFP 100 is in the sleep mode, the CPU 101 changes the MFP 100 from the sleep mode to the standby mode.

A start key 605 is a key usable for receiving from a user an instruction causing the MFP 100 to perform an operation such as a copy and a data transmission.

A stop key 604 is a key usable for receiving from a user an instruction to interrupt a copy or a data transmission in processing.

A numeric keypad 606 includes keys usable for receiving from a user a setting for the number of copies, a telephone number and others.

Next, the touch panel section 602 will be described. The touch panel section 602 has an LCD (liquid crystal display or liquid crystal display unit) and a touch panel sheet including a transparent electrode attached thereon. The LCD may display an operation screen and a status of the MFP 100, and the touch panel sheet is usable for receiving an operation from the user on the operation screen displayed on the LCD.

The MFP 100 executes a plurality of types of job. For example, the MFP 100 reads an image on a document by using the scanner 117 and executes a copy job causing the printer 118 to print the image based on the generated image data.

The MFP 100 may receive image data and a print setting through the LAN 112 and executes a PC print job causing the printer 118 to print an image based on the received image data and print setting.

The MFP 100 may further read an image on a document by using the scanner 117 and executes a facsimile transmission job causing the generated image data to be transmitted through the PSTN 110.

The MFP 100 is capable of receiving image data through the PSTN 110.

The image data received through the PSTN 110 are transmitted from various sources (communication partners).

For example, when image data of an urgent document, for example, is received from a source who transmits image data requiring a user on the receiving side to check immediately, the user on the receiving side needs to print the image based on the image data immediately.

On the other hand, when a call is incoming from a source who transmits an advertisement unnecessary for a user, the user may reject the reception so as to prevent an increase of works for checking the content of the image data transmitted from the source.

When it is not clear for a user on the receiving side whether the image data transmitted from a new source should be printed or not, the user on the receiving side needs to check the content of the image data before printing.

However, in the past, a user is not able to preselect one of three processes of inhibiting reception of image data, printing image data without receiving a print instruction and printing image data in accordance with a print instruction.

With the MFP 100 according to this embodiment, a user is able to preselect one of three processes of inhibiting reception of image data, printing image data without receiving a print instruction and printing image data in accordance with a print instruction.

The MFP 100 then executes the selected process by a predetermined method.

Next, specific control will be described below.

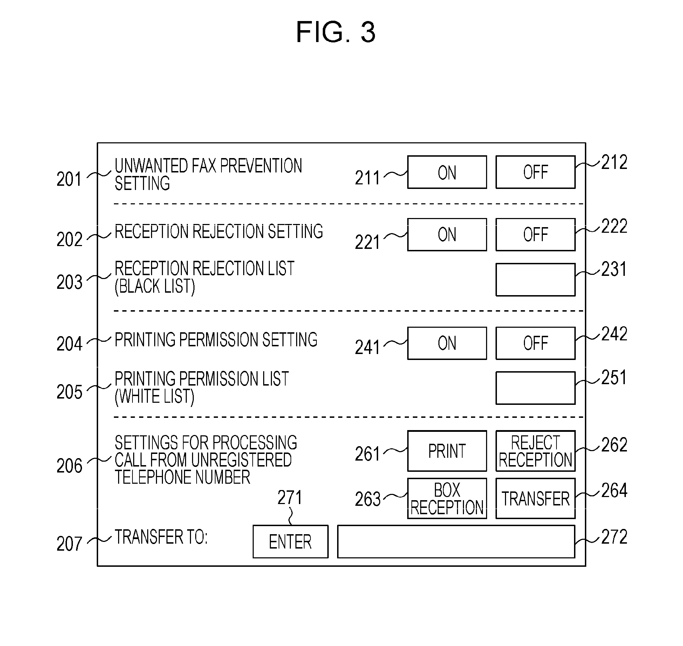

Fig. 3 is a screen to be displayed on the operating unit 116. A user may define facsimile reception settings through the screen.

An unwanted facsimile prevention setting is an item for setting whether control based on settings defined on the screen illustrated in Fig. 3 is to be performed or not. When an ON button 211 is selected, the CPU 101 enables the setting defined on the screen in Fig. 3 and controls in accordance with the setting defined on the screen in Fig. 3. When an OFF button 212 is selected, the CPU 101 disables the setting defined on the screen in Fig. 3 and after image data is received through the PSTN 110, it is controlled so as to perform printing based on the image data without receiving a print instruction from the user.

When the OFF button 212 is selected, the CPU 101 may control so as to inhibit to receive an operation from a user by graying out an item 202 and subsequent items.

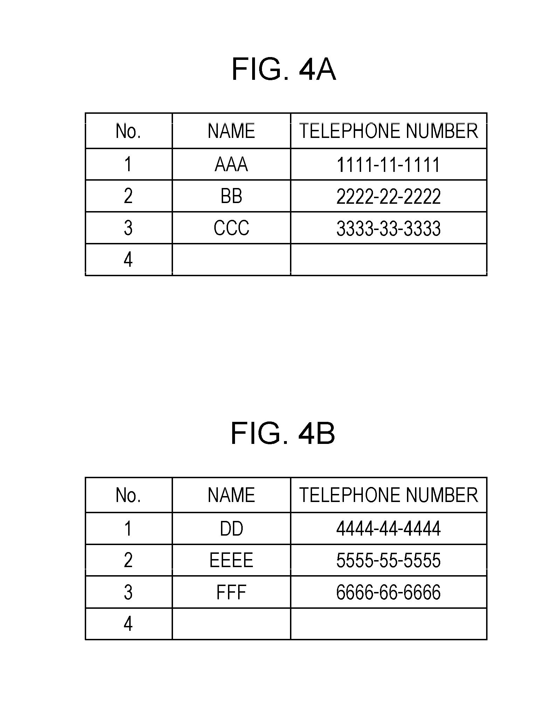

The reception rejection setting 202 is an item usable for defining whether a reception rejection list is activated or not. Fig. 4A is an exemplary reception rejection list. The reception rejection list may also be called a black list. The reception rejection list is stored in the HDD 104 and is referred by the CPU 101. The reception rejection list stores in one record a "No. (number)", a "name", and a "telephone number". The "No. (number)" is an identifier to be uniquely allocated to each record by the CPU 101. The "name" is a name to be registered so that a user can identify a source, and the "telephone number" is a source telephone number set to reject reception of image data therefrom.

When an ON button 221 in Fig. 3 is selected, the reception rejection list is activated, and image data is not received from a communication partner calling by using a telephone number stored in the reception rejection list. When the OFF button 222 in Fig. 3 is selected, the CPU 101 inactivates the reception rejection list and does not control in accordance with the setting defined in the reception rejection list.

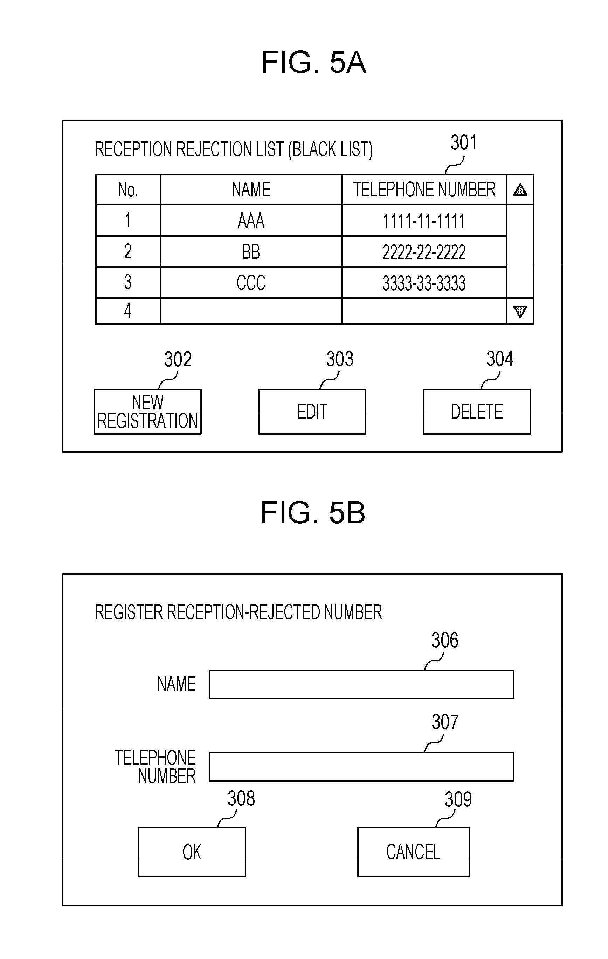

A reception rejection list item 203 is an item usable for editing the reception rejection list. When a button 231 is pressed, the CPU 101 causes the operating unit 116 to display the reception rejection list illustrated in the Fig. 5A based on the reception rejection list in Fig. 4A. Fig. 5A will be described below.

A print permission setting 204 is an item usable for defining whether a print permission list in Fig. 3 is to be activated or not. Fig. 4B illustrates an exemplary print permission list. The print permission list may also be called a white list. The print permission list is stored in the HDD 104 and is referred by the CPU 101. The print permission list stores in one record a "No. (number)", a "name", and a "telephone number". The "No. (number)" is an identifier to be uniquely allocated to each record by the CPU 101. The "name" is a name to be registered so that a user can identify a source, and the "telephone number" is a source telephone number set to execute printing of image data therefrom without receiving a printing instruction from the user.

When an ON button 241 in Fig. 3 is selected, the print permission list is activated. In other words, in response to an incoming call from a telephone number stored in the print permission list, the CPU 101 controls so as to execute printing based on image data received from the communication partner represented by the telephone number without receiving a print instruction from a user. When an OFF button 242 is selected in Fig. 3, the print permission list is inactivated, and the control based on the setting defined in the print permission list is not performed.

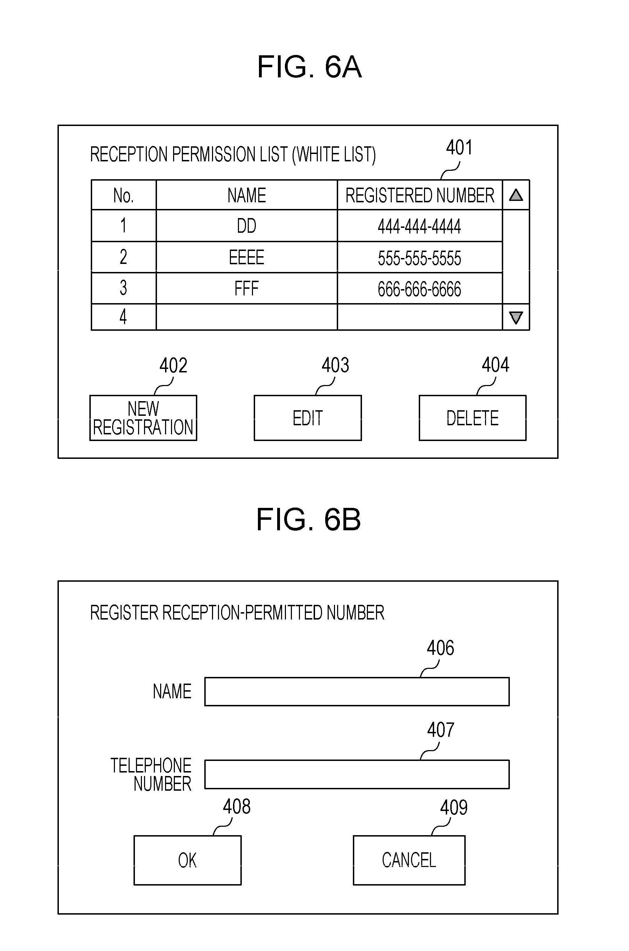

A print permission list item 205 is an item usable for editing a print permission list. When a button 251 is pressed, the CPU 101 display a print permission list illustrated in Fig. 6A on the touch panel section 602 based on the print permission list in Fig. 4B. Fig. 6A will be described below.

The setting 206 for processing in response to an incoming call from a un registered telephone number in Fig. 3 defines a setting for processing to be performed in response to an incoming call from a telephone number not registered in either reception rejection list or print permission list. This setting will be called a processing setting 206 below.

As the processing to be performed in response to an incoming call from a telephone number not registered in either reception rejection list or print permission list, a user is able to select one of printing, reception rejection, box reception, and transfer.

When a print button 261 is selected, in response to an incoming call from a telephone number not registered in either reception rejection list or print permission list reception rejection list, image data is received from the source represented by the telephone number, and printing is executed based on image data without waiting for a print instruction from a user.

When a reception rejection button 262 is selected, in response to an incoming call from a telephone number not registered in either reception rejection list or print permission list reception rejection list, the reception of image data from the source represented by the telephone number is rejected.

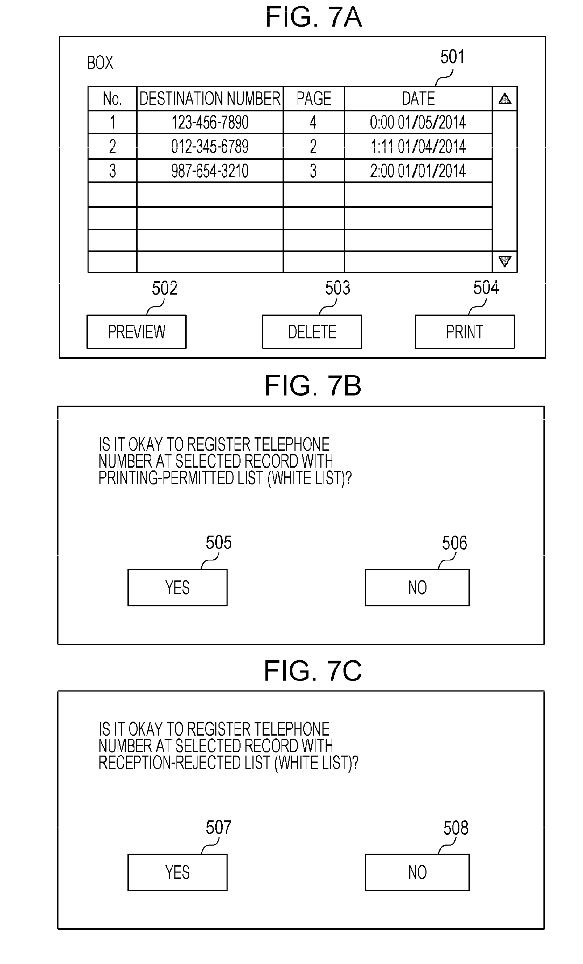

When a box reception button 263 is selected, in response to an incoming call from a telephone number not registered in either reception rejection list or print permission list reception rejection list, image data from the source represented by the telephone number is received, and the received image data is saved in box area within the HDD 104. The box area refers to a partial area within the HDD 104. The received image data are saved in the HDD 104 without being printed and is saved until a print instruction is received from a user. The saved image data is displayed on the operating unit 116 when an instruction to display a box area screen is received from a user through the operating unit 116. Fig. 7A is an exemplary box area screen. Fig. 7A will be described below.

A transfer button 264 is a button usable for receiving a transfer instruction. When the transfer button 264 is selected, in response to an incoming call from a telephone number not registered in either reception rejection list or print permission list reception rejection list, image data is received from the source represented by the telephone number, and the received image data is transferred to a destination set in a destination 207. The destination 207 is an item usable for receiving a setting for a destination. When an input button 271 is pressed, a software keyboard screen is displayed on the touch panel section 602. A text string entered through the software keyboard screen is stored in the HDD 104 and is displayed in a display field 272 as a destination.

Next, a method for editing the reception rejection list will be described with reference to Figs. 5A and 5B.

Fig. 5A illustrates a reception rejection list 301. This screen is displayed when the button 231 in Fig. 3 is pressed.

The reception rejection list 301 in Fig. 5A displays reception rejection numbers stored in the reception rejection list in Fig. 4A.

A new registration button 302 is pressed by a user to newly register a reception rejection number.

When the new registration button 302 is pressed, a reception-rejection-number registration screen in Fig. 5B is displayed. The reception-rejection-number registration screen displays a name 306 and a telephone number 307. When an entry field for the name 306 is pressed, a software keyboard is displayed, and a user enters a name through the displayed software keyboard. When an entry field for the telephone number 307 is pressed, a software keyboard is displayed. A user enters a telephone number the reception of which is to be rejected through the displayed software keyboard. The entered name and telephone number are stored temporarily in the RAM 103 by the CPU 101.

When an OK button 308 is pressed, the name 306 and telephone number 307 stored in the RAM 103 are stored in the list in Fig. 4A as a new record by the CPU 101. The CPU 101 causes the operating unit 116 to display the reception rejection list in Fig. 5A. In this case, the name 306 and telephone number 307 entered on the screen in Fig. 5B are added to the reception rejection list 301 to be displayed.

On the other hand, when a cancel button 309 is pressed, the CPU 101 causes the operating unit 116 to display the reception rejection list 301 in Fig. 5A, without registering the name 306 and telephone number 307 stored in the RAM 103 with the list in Fig. 4A.

An edit button 303 in Fig. 5A is a button to be pressed for editing the reception rejection list in Fig. 4A. A user may select a record corresponding to the reception rejection number to be edited from the reception rejection list 301 and then press the edit button 303. When the edit button 303 is pressed, the CPU 101 causes the operating unit 116 to display the screen illustrated in Fig. 5B to edit the name and telephone number of the record selected by the user. For the editing, the name and telephone number of the record selected by a user are kept on the displayed screen illustrated in Fig. 5B.

A delete button 304 in Fig. 5A is a button to be pressed for deleting a record registered with the reception rejection list in Fig. 4A. A user may select a record corresponding to the reception rejection number to be deleted from the reception rejection list 301 and press the delete button 304. When the delete button 304 is pressed, the CPU 101 deletes the selected record from the reception rejection list in Fig. 4A.

Next, a method for editing the print permission list will be described with reference to Figs. 6A and 6B.

Fig. 6A illustrates a screen including a print permission list 401. This screen is displayed when the button 251 in Fig. 3 is pressed.

The print permission list 401 in Fig. 6A displays a print permission number stored in the print permission list in Fig. 4B.

A new registration button 402 is pressed when a user needs to register a print permission number newly.

When the new registration button 402 is pressed, a print-permission-number registration screen in Fig. 6B is displayed. The print-permission-number registration screen displays a name 406 and a telephone number 407. When an entry field for the name 406 is pressed, a software keyboard is displayed. A user may enter a name through the displayed software keyboard. When an entry field for the telephone number 407 is pressed, a software keyboard is displayed. A user may enter a telephone number to be permitted to print through the displayed software keyboard. The entered name and telephone number are stored in the RAM 103 temporarily by the CPU 101.

When an OK button 408 is pressed, the name 406 and telephone number 407 stored in the RAM 103 are stored as a new record in the list in Fig. 4B by the CPU 101. The CPU 101 then causes the operating unit 116 to display the print permission list in Fig. 6A. In this case, the name 406 and telephone number 407 entered on the screen in Fig. 6B are added to the print permission list 401 to be displayed.

On the other hand, when a cancel button 409 is pressed, the CPU 101 causes the operating unit 116 to display the print permission list 401 in Fig. 6A without registering the name 406 telephone number 407 stored in the RAM 103 with the list in Fig. 4B.

An edit button 403 in Fig. 6A is a button to be pressed for editing the print permission list in Fig. 4B. A user may select a record corresponding to the print permission number to be edited from the print permission list 401 and then press the edit button 403. When the edit button 403 is pressed, the CPU 101 causes the operating unit 116 to display the screen in Fig. 6B to edit the name and telephone number of the record selected by the user. For the editing, the name and telephone number of the record selected by a user are kept on the displayed screen illustrated in Fig. 6B.

A delete button 404 in Fig. 6A is a button to be pressed for deleting a record registered with the print permission list in Fig. 4B. A user may select a record corresponding to the print permission number to be deleted from the print permission list 401 and press the delete button 404. When the delete button 404 is pressed, the CPU 101 deletes the selected record from the print permission list in Fig. 4B.

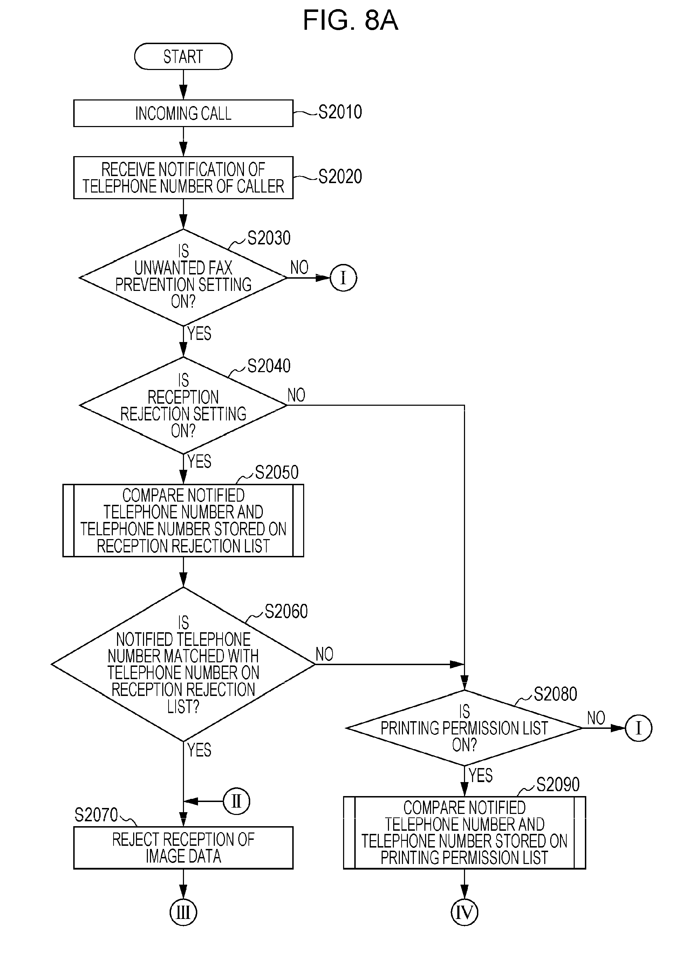

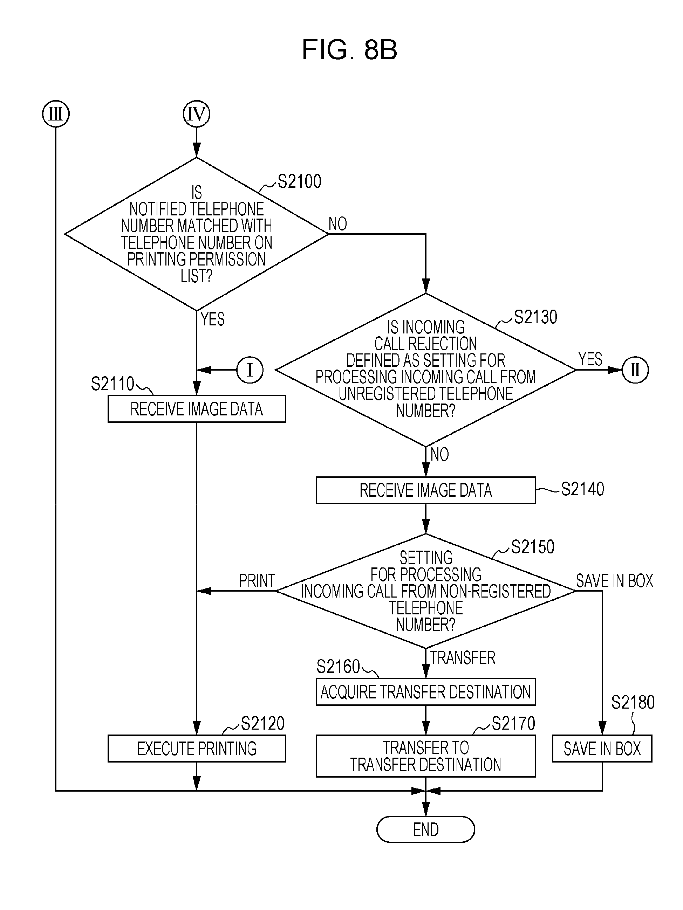

Figs. 8A and 8B are a flowchart illustrating operations in response to an incoming call in the MFP 100 according to this embodiment. Steps of the flowchart in Figs. 8A and 8B are performed by the CPU 101 by reading out to and executing in the RAM 103 a program stored in the ROM 102.

In S2010, the CPU 101 uses the NCU 109 to detect an incoming call received through the PSTN 110 from a signal from the NCU 109 and catch the corresponding line.

In S2020, the CPU 101 receives a notification of a TSI signal from a source apparatus through the NCU 109. The CPU 101 identifies the telephone number of the source from the notified TSI signal. The identified telephone number is stored in the RAM 102 by the CPU 101. The TSI signal represents information describing a telephone number registered by a source user with the source apparatus and is to be transmitted from the source.

In S2030, the CPU 101 determines whether the unwanted facsimile prevention setting is ON or not. If the ON button 211 for the unwanted facsimile prevention setting 201 in Fig. 3 is selected, the CPU 101 determines that the unwanted facsimile prevention setting is ON and advances the processing to S2040. On the other hand, if the OFF button 212 for the unwanted facsimile prevention setting 201 in Fig. 3 is selected, the CPU 101 determines that the unwanted facsimile prevention setting is OFF and advances the processing to S2140.

In S2040, the CPU 101 determines whether the reception rejection setting is ON or not. If the ON 221 for the reception rejection setting 202 in Fig. 3 is selected, the CPU 101 determines that the reception rejection setting is ON and advances the processing to S2050. On the other hand, if the OFF 222 for the reception rejection setting 202 in Fig. 3 is selected, the CPU 101 determines that the reception rejection setting is OFF and advances the processing to S2080.

In S2050, the CPU 101 compares the telephone number notified in S2020 and telephone numbers stored in the reception rejection list.

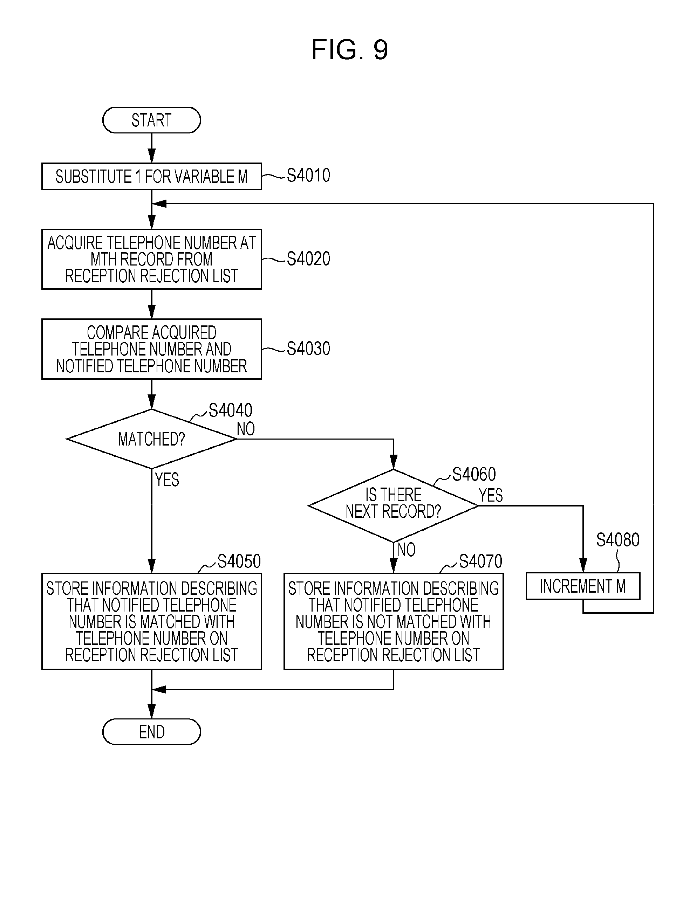

The comparing processing in S2050 will be described with reference to the flowchart in Fig. 9. The steps in the flowchart in Fig. 9 are performed by the CPU 101 by reading out to and executing in the RAM 103 a program stored in the ROM 102.

In S4010, the CPU 101 generates a variable M in the RAM 102 and substitutes 1 for the variable M.

In S4020, the CPU 101 acquires the telephone number of the Mth record from the reception rejection list illustrated in Fig. 4A.

In S4030, the CPU 101 compares the telephone number acquired in S4020 and the telephone number notified in S2020.

In S4040, the CPU 101 determines whether the telephone number acquired in S4020 and the telephone number notified in S2020 are matched or not. If so, the CPU 101 advances the processing to S4050. If not, the CPU 101 advances the processing to S4060.

In S4050, the CPU 101 stores information describing that the notified telephone number and the telephone number in the reception rejection list are matched in the RAM 102 and advances the processing to S2060 in Fig. 8A.

After advancing the processing from S4040 to S4060, the CPU 101 determines whether there is the next record or not. If not, the CPU 101 advances the processing to S4070. If so, the CPU 101 advances the processing to S4080.

In S4070, the CPU 101 stores information describing that the notified telephone number and the telephone number in the reception rejection list are not matched in the RAM 102 and advances the processing to S2060 in Fig. 8A.

After advancing the processing from S4060 to S4080, the CPU 101 increments the value of the variable M stored in the RAM 102 and advances the processing to S4020.

Referring back to Figs. 8A and 8B, in S2060, the CPU 101 determines whether the notified telephone number and any one of the telephone numbers stored in the reception rejection list are matched or not based on the information stored in S4050 or S4070. When information describing the notified telephone number and one of the telephone numbers in the reception rejection list are matched is stored, the CPU 101 determines that the notified telephone number and the one of the telephone numbers in the reception rejection list are matched and advances the processing to S2070. On the other hand, information describing the notified telephone number and the one of the telephone numbers in the reception rejection list are not matched is stored, the CPU 101 determines that the notified telephone number and the one of the telephone number in the reception rejection list are not matched and advances the processing to S2080.

After advancing the processing to S2070, the CPU 101 rejects the reception of the image data and ends the processing. More specifically, the CPU 101 disconnects the line by transmitting a disconnection request for the line to the source without transmitting a transmission request for the image data to the source and ends the processing.

After advancing the processing to S2080, the CPU 101 determines whether the print permission list is ON or not. If the ON 241 for the print permission setting 204 in Fig. 3 is selected, the CPU 101 determines that the print permission setting is ON and advances the processing to S2090. On the other hand, if the OFF 242 for the print permission setting 204 in Fig. 3 is selected, the CPU 101 determines that the print permission setting is OFF and advances the processing to S2110.

In S2090, the CPU 101 compares the notified telephone number and telephone numbers stored in the print permission list.

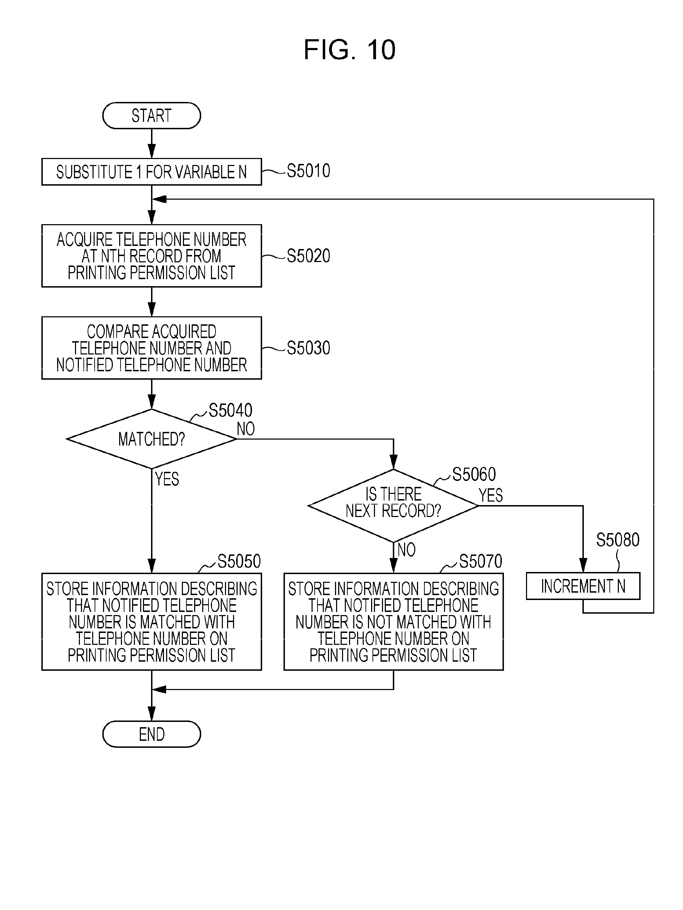

The comparison processing in S2090 will be described with reference to the flowchart in Fig. 10. The steps in the flowchart in Fig. 10 are performed by the CPU 101 by reading out to and executing in the RAM 103 a program stored in the ROM 102.

In S5010, the CPU 101 generates a variable N in the RAM 102 and substitutes 1 for the variable N.

In S5020, the CPU 101 acquires the telephone number of the Nth record from the print permission list illustrated in Fig. 4B.

In S5030, the CPU 101 compares the telephone number acquired in S5020 and the telephone number notified in S2020.

In S5040, the CPU 101 determines whether the telephone number acquired in S5020 and the telephone number notified in S2020 are matched or not. If so, the CPU 101 advances the processing to S5050. If not, the CPU 101 advances the processing to S5060.

In S5050, the CPU 101 stores information describing that the notified telephone number and the telephone number in the reception rejection list are matched in the RAM 102 and advances the processing to S2100 in Fig. 8B.

After advancing the processing from S5040 to S5060, the CPU 101 determines whether there is the next record or not. If not, the CPU 101 advances the processing to S5070. If so, the CPU 101 advances the processing to S5080.

In S5070, the CPU 101 stores information describing that the notified telephone number and the telephone number in the reception rejection list are not matched in the RAM 102 and advances the processing to S2100 in Fig. 8B.

After advancing the processing from S5060 to S5080, the CPU 101 increments the value of the variable N stored in the RAM 102 and advances the processing to S5020.

Referring back to Figs. 8A and 8B, in S2100, the CPU 101 determines whether the notified telephone number and one of telephone numbers in the print permission list are matched or not based on the information stored in S5050 or S5070. If information describing that the notified telephone number and one of telephone numbers in the print permission list are matched is stored, the CPU 101 determines that the notified telephone number and one of the telephone numbers in the print permission list are matched and advances the processing to S2110. On the other hand, if information describing that the notified telephone number and one of telephone numbers in the print permission list are not matched is stored, the CPU 101 determines that the notified telephone number and one of the telephone numbers in the print permission list are not matched and advances the processing to S2130.

In S2110, the CPU 101 transmits a transmission request for the image data to the telephone number of the source, receives the image data in response thereto and stores the received image data to the HDD 104. When the storage of the received image data completes, the CPU 101 transmits a disconnection request for the line to the source and disconnects the line.

In S2120, the CPU 101 prints an image based on the image data stored in the HDD 104 on a sheet and ends the processing.

If advancing the processing from S2100 to S2130 In S2130, the CPU 101 determines whether the setting for the processing in response to an incoming call from an unregistered telephone number is rejection of incoming calls or not based on the processing selected in processing setting 206 in Fig. 3. If the reception rejection button 262 is selected, the CPU 101 determines that the setting for the processing in response to an incoming call from an unregistered telephone number is rejection of incoming calls and advances the processing to S2070. On the other hand, if the reception rejection button 262 is not selected, it is determined that the setting for the processing in response to an incoming call from an unregistered telephone number is not the rejection of incoming calls and advances the processing to S2140.

In S2140, the CPU 101 transmits a transmission request for the image data to the source telephone number, receives the image data in response thereto and stores the received image data to the HDD 104. When the storage of the received image data completes, the CPU 101 transmits a disconnection request for the line to the source and disconnects the line.

In S2150, the CPU 101 determines whether the setting for the processing in response to an incoming call from an unregistered telephone number is printing, transferring, or box area reception based on the processing selected in the processing setting 206 in Fig. 3. When the print button 261 is selected, the CPU 101 advances the processing to S2120. If the transfer button 264 is selected, the CPU 101 advances the processing to S2160. If the box reception button 263 is selected, the CPU 101 advances the processing to S2180.

If advancing the processing to S2120, the CPU 101 prints an image based on the image data stored in the HDD 104 on a sheet and ends the processing.

If advancing the processing to S2160, the CPU 101 refers to a destination defined by the destination 207 and stored in the HDD 104.

In S2170, the CPU 101 transfers the image data stored in the HDD 104 to the destination acquired in S2060 and ends the processing.

If advancing the processing to S2180, the CPU 101 saves (moves or copies) the image data stored in the HDD 104 to a box area in the HDD 104 and ends the processing.

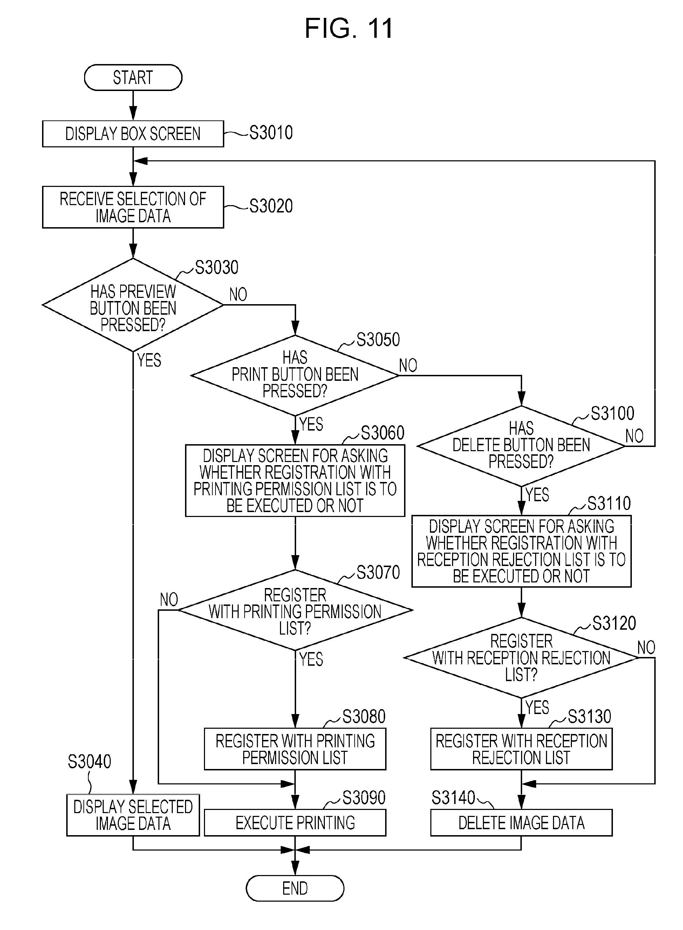

Fig. 11 is a flowchart illustrating operations to be performed in response to an incoming call in the MFP 100 according to this embodiment. The steps in the flowchart in Fig. 11 are performed by the CPU 101 by reading out to and executing in the RAM 103 a program stored in the ROM 102.

This flowchart start in response to an instruction to display a box area screen received through the operating unit 116.

In S3010, the CPU 101 displays a box area screen on the operating unit 116. Fig. 7A illustrates an example of the box area screen. A list 501 contains image data saved in the box area in S2180. The list displays "No.", a "communication partner", a "page", and a "date", and a record is displayed separately for each image data. The "No." corresponds to a number to be allocated uniquely by the CPU 101 to each record of the list. The "communication partner" corresponds to a source telephone number notified in S2020. The "communication partner" corresponds to the telephone number notified in S2020 and saved by the CPU 101. The "page" corresponds to the page number of the saved image data. The "date" corresponds to a store time when the image data has been saved. The store time is saved in the HDD 104 along with the image data based on date and time information acquired by the timer 106 and is displayed thereon.

In S3020, the CPU 101 receives a selection of one image data piece from image data pieces displayed on the list 501.

In S3030, the CPU 101 determines whether a preview module button 502 in Fig. 7A has been pressed or not. If it is determined that the preview module button 502 has been pressed, the CPU 101 advances the processing to S3040. If not, the CPU 101 advances the processing to S3050.

In S3040, the CPU 101 causes the operating unit 116 to display an image based on the image data selected in S3020. A user may check the content of the image data by viewing the displayed image.

In S3050, the CPU 101 determines whether a print button 504 has been pressed or not. If it is determined that print button 504 has been pressed, the CPU 101 advances the processing to S3060. If not, the CPU 101 advances the processing to S3100.

In S3060, the CPU 101 causes the operating unit 116 to display a screen for prompting a user to determine whether the telephone number of the selected record is to be registered with the print permission list or not. Fig. 7B illustrates an example of the screen to be displayed in S3060. The screen illustrated in Fig. 7B displays a message inquiring a user of whether the telephone number of the selected record is to be registered with the print permission list or not, a "YES" button 505, and a "NO" button 506.

In S3070, the CPU 101 determines whether the telephone number of the selected record is to be registered with the print permission list or not. If the "YES" button 505 is pressed, the CPU 101 determines that the telephone number of the selected record is to be registered with the print permission list and advances the processing to S3080.

In S3080, the CPU 101 registers the telephone number of the selected record with the print permission list in Fig. 4B as a new record and advances the processing to S3090. The name may not be set upon the registration, and the screen illustrated in Fig. 6B may be displayed on the operating unit 116 in response to a press of the "YES" button 505 so that a name can be received from a user.

If the "NO" button 506 is pressed on the other hand, the CPU 101 determines that the telephone number of the selected record is not to be registered with the print permission list and advances the processing to S3090 without performing the processing in S3080.

In S3090, the CPU 101 reads out the image data corresponding to the selected record from the box area in HDD 104 and transmits it to the printer 118, causes the printer 118 to execute printing based on the image data and ends the processing.

After advancing the processing from S3050 to S3100, the CPU 101 determines whether a "delete" button 503 has been pressed or not. If it is determined that the "delete" button 503 is pressed, the CPU 101 advances the processing to S3110 in response to the delete instruction. If not, the CPU 101 advances the processing to S3020.

In S3110, the CPU 101 causes the operating unit 116 to display a screen for inquiring whether the telephone number of the selected record is to be registered with the reception rejection list or not. Fig. 7C illustrates an example of the screen to be displayed in S3110. The screen illustrated in Fig. 7C displays a message inquiring a user of whether the telephone number of the selected record is to be registered with the reception rejection list or not, a "YES" button 507, and a "NO" button 508.

In S3120, the CPU 101 determines whether the telephone number of the selected record is to be registered with the reception rejection list. If the "YES" button 507 is pressed, the CPU 101 determines that the telephone number of the selected record is to be registered with the reception rejection list and advances the processing to S3130.

In S3130, the CPU 101 registers the telephone number of the selected record with the reception rejection list in Fig. 4A as a new record and advances the processing to S3140. The name may not be set upon the registration, and the screen illustrated in Fig. 5B may be displayed on the operating unit 116 in response to a press of the "YES" button 507 so that a name can be received from a user.

If the "NO" button 508 is pressed on the other hand, the CPU 101 does not register the telephone number of the selected record with the reception rejection list and advances the processing to S3140 without performing the processing in S3130.

Under the control as described above, a user is able to pre-select one of three options of inhibiting reception of image data, printing image data without a print instruction, and printing image data in accordance with a print instruction.

### Other Embodiments

According to the aforementioned embodiment, a source to be inhibited from receiving image data therefrom and a source to be permitted to print image data therefrom without receiving an instruction from a user are provided. However, the present invention is not limited thereto. For example, other embodiments are also applicable.

A source to be inhibited from receiving image data therefrom and a source to be allowed to print image data therefrom after receiving an instruction from a user are provided. In response to an incoming call from the source set to be inhibited from receiving image data, the CPU 101 rejects reception of image data from the source. On the other hand, in response to an incoming call from a source set to be allowed to print image data after receiving an instruction from a user, the CPU 101 controls so as to store the image data received from the source until an instruction is received from the user and print after receiving an instruction from the user. In response to an incoming call from a source for which none of the options is set, the CPU 101 controls so as to print image data received from the source without receiving an instruction from a user.

The following embodiment is also applicable.

A source for which image data therefrom is to be printed without receiving an instruction from a user and a source for which image data therefrom is to be printed after receiving an instruction from a user may be set. In response to an incoming call from a source for which image data therefrom is to be printed without receiving an instruction from a user, the CPU 101 controls so as to print the image data received from the source without receiving an instruction from a user. On the other hand, in response to an incoming call from a source for which image data therefrom is to be printed after receiving an instruction from a user, the CPU 101 controls so as to store the image data received from the source until an instruction is received from a user and print it after receiving an instruction from a user. In response to an incoming call from a source for which none of the options is set, the CPU 101 controls so as to print image data received from the source without receiving an instruction from a user.

According to these setting methods, a user is able to pre-select one of three options of inhibiting reception of image data, printing image data without a print instruction, and printing image data in accordance with a print instruction.

According to the aforementioned embodiments, facsimile reception has been described, for example. However, the present invention is not limited thereto and may be applicable to e-mail reception. When the present invention is applied to e-mail reception, information describing whether inhibiting e-mail reception or printing an e-mail without receiving an instruction from a user may be set for an e-mail address (which is identification information usable for identifying a source, like a telephone number as described above) of each source. In response to a reception request for an e-mail from a user, the CPU 101 receives the e-mail address of the source of the e-mail from a POP server. If inhibiting e-mail reception is set for the source of the e-mail address, the CPU 101 ends the processing without receiving the e-mail. On the other hand, if the source of the e-mail address is set for printing the e-mail without receiving an instruction from a user, the CPU 101 controls so as to receive the e-mail and print the received e-mail without receiving an instruction from the user. In response to an incoming call from a source for which none of the options is set, the CPU 101 controls so as to receive the e-mail, store the received e-mail until an instruction from a user is received, and print the stored e-mail in response to reception of the instruction from a user.

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

A printing apparatus according to the present invention includes first storage means (104) for storing a telephone number inhibited from reception of image data therefrom, second storage means (104) for storing a telephone number permitted to print image data without a print instruction from a user, and control means (101) for controlling so as to inhibit reception of image data if a telephone number of a communication partner is stored in the first storage means (104), to print image data without the print instruction from the user if the telephone number of the communication partner is stored in the second storage means (104), and to print image data in accordance with the print instruction from the user if the telephone number of the communication partner is not stored in the first storage means (104) and the second storage means (104).

## Claims

1. A printing apparatus comprising:
first storage means (104) for storing a telephone number inhibited from reception of image data therefrom;
second storage means (104) for storing a telephone number permitted to print image data without a print instruction from a user; and
control means (101) for controlling so as to inhibit reception of image data if a telephone number of a communication partner is stored in the first storage means (104), to print image data without the print instruction from the user if the telephone number of the communication partner is stored in the second storage means (104), and to print image data in accordance with the print instruction from the user if the telephone number of the communication partner is not stored in the first storage means (104) and the second storage means (104).

2. The printing apparatus according to claim 1, wherein the control means (101) controls so as to disconnect a line before receiving the image data if the telephone number of the communication partner is stored in the first storage means (104).

3. The printing apparatus according to claim 1, wherein the control means (101) controls so as to save image data from the communication partner in saving means (104) until the print instruction is received from the user if the telephone number of the communication partner is not stored in the first storage means (104) and the second storage means (104).

4. The printing apparatus according to claim 3, further comprising displaying means (116) for displaying image data saved in the saving means (104).

5. The printing apparatus according to claim 3, wherein the second storage means (104) newly stores the telephone number of the communication partner having transmitted the image data in response to reception from a user of a print instruction to print the image data saved in the saving means (104).

6. The printing apparatus according to claim 3, wherein the first storage means (104) newly stores the telephone number of the communication partner having transmitted the image data in response to reception from a user of a delete instruction to delete the image data saved in the saving means (104).

7. The printing apparatus according to any one of claims 1 to 6, wherein the control means (101) controls so as to transfer image data in accordance with a transfer instruction from a user if the telephone number of the communication partner is not stored in the first storage means (104) and the second storage means (104).

8. A control method for a printing apparatus having first storage means (104) for storing a telephone number inhibited from reception of image data therefrom; and
second storage means (104) for storing a telephone number permitted to print image data without a print instruction from a user,
the method comprising controlling so as to inhibit reception of image data if a telephone number of a communication partner is stored in the first storage means (104), to print image data without the print instruction from the user if the telephone number of the communication partner is stored in the second storage means (104), and to print image data in accordance with the print instruction from the user if the telephone number of the communication partner is not stored in the first storage means (104) and the second storage means (104).

9. The method for controlling the printing apparatus according to claim 8, wherein the controlling controls so as to disconnect a line before receiving the image data if the telephone number of the communication partner is stored in the first storage means (104).

10. The method for controlling the printing apparatus according to claim 8, the controlling controls so as to save image data from the communication partner in saving means (104) until the print instruction is received from the user if the telephone number of the communication partner is not stored in the first storage means (104) and the second storage means (104).

11. The method for controlling the printing apparatus according to claim 10, further comprising displaying image data saved in the saving means (104).

12. The method for controlling the printing apparatus according to claim 10, wherein the second storage means (104) newly stores the telephone number of the communication partner having transmitted the image data in response to reception from a user of a print instruction to print the image data saved in the saving means (104).

13. The method for controlling the printing apparatus according to claim 10, wherein the first storage means (104) newly stores the telephone number of the communication partner having transmitted the image data in response to reception from a user of a delete instruction to delete the image data saved in the saving means (104).

14. The method for controlling the printing apparatus according to any one of claims 8 to 13, wherein the controlling controls so as to transfer image data in accordance with a transfer instruction from a user if the telephone number of the communication partner is not stored in the first storage means (104) and the second storage means (104).

15. A computer-readable storage medium storing a program for causing a computer to execute a control method for a printing apparatus having
first storage means (104) for storing a telephone number inhibited from reception of image data therefrom; and
second storage means (104) for storing a telephone number permitted to print image data without a print instruction from a user,
the method comprising controlling so as to inhibit reception of image data if a telephone number of a communication partner is stored in the first storage means (104), to print image data without the print instruction from the user if the telephone number of the communication partner is stored in the first storage means (104), and to print image data in accordance with the print instruction from the user if the telephone number of the communication partner is not stored in the first storage means (104) and the second storage means (104).
